# EUROPÄISCHE PATENTANMELDUNG

(11) **EP 2 824 048 A1**
(43) Veröffentlichungstag der Anmeldung: **14.01.2015**
(21) Anmeldenummer: 13003536.3
(22) Anmeldetag: 12.07.2013
(51) Int. Cl.: B65G 65/32

(54) **Anordnung umfassend mehrere Silokammern**

(71) Anmelder: Ammann Schweiz AG, 4900 Langenthal (CH)
(72) Erfinder: Kerner, Gerhard, CH-6144 Zell (CH); Richard, Peter, CH-4912 Aarwangen (CH)
(74) Vertreter: Münch, Martin Walter

(57) **Zusammenfassung**

Die Erfindung betrifft eine Anordnung (1) mit mehreren Silokammern (2a-2f), welche an ihrem oberen Ende jeweils eine Einfüllöffnung (3a-3f) zum Einfüllen von schüttfähigem Material durch Schwerkraftförderung aufweisen. Die Einfüllöffnungen (3a-3f) sind jeweils zumindest in einem Teilbereich durch ein gemeinsames Abdeckelement (4) abgedeckt, welches eine Durchtrittsöffnung (6) aufweist und derartig bewegbar ist, dass diese Durchtrittsöffnung (6) wahlweise in Überdeckung mit den Einfüllöffnungen (3a-3f) verschiedener Silokammern (2a-2f) gebracht werden kann. Auf dem Abdeckelement (4) sind mit diesem mitbewegbare Fördermittel (5) angeordnet, mit denen ein schüttfähiges Material, welches an einem anlagefesten Zuführungsort (Z) den Fördermitteln (5) zugeführt wird, zu der sich in Überdeckung mit einer der Einfüllöffnungen (3a-3f) befindlichen Durchtrittsöffnung (6) geführt werden kann.

Durch die erfindungsgemässe Anordnung (1) wird es möglich, kostengünstig mehrere Silokammern (2a-2f) für schüttfähiges Material bereitzustellen und derartig zu bewirtschaften, dass diese eine hohe Personensicherheit und eine reduzierte Neigung zur Brückenbildung aufweisen. Zudem kann durch diese Anordnung die Staubentwicklung und die Gefahr eines Feuchtigkeitseintrags in die Silokammern deutlich verringert werden.

## Beschreibung

### TECHNISCHES GEBIET

Die Erfindung betrifft eine Anordnung umfassend mehrere Silokammern sowie die Verwendung der Anordnung für schüttfähige Zuschlagstoffe für die Betonherstellung gemäss den Oberbegriffen der unabhängigen Patentansprüche.

### STAND DER TECHNIK

Bei Betonmischtürmen ist es heute üblich, die verschiedenen Zuschlagstoffe, wie z.B. Sand und Kies, gemäss der gewünschten Rezeptur aus verschiedenen über dem Mischer angeordneten Silokammern zur Verfügung zu stellen. Diese Silokammern werden von ihrem oberen Ende her befüllt, indem die Zuschlagstoffe mittels einer Förderanlage (Elevator) an einen Ort oberhalb der Silokammern gefördert werden, von welchem aus sie sodann zur Einfüllöffnung der jeweiligen Silokammer transportiert werden. Dies geschieht heute mit verfahrbaren Förderbändern und/- oder verfahrbaren Führungseinrichtungen, wie z.B. Führungstrichtern, welche jeweils derartig positioniert werden, dass sie eine Transportverbindung zwischen dem Zuführungsort und der Einfüllöffnung der jeweiligen Silokammer herstellen. Aus Gründen der Personensicherheit sind die Einfüllöffnungen der Silokammern üblicherweise mit einem groben Gitter abgedeckt, durch welches die Zuschlagstoffe beim Zuführen in die jeweilige Silokammer hindurch treten.

Bei derartigen Anlagen ergibt sich jedoch häufig das Problem, dass es zu einer Brückenbildung des zuzuführenden Materials im Eintrittsbereich zu den Silokammern kommt. Ein weiteres Problem dieser Anlagen besteht darin, dass die Staubentwicklung auch nach dem eigentlichen Befüllen relativ gross ist und dass bei nicht überdachten Anlagen ein Feuchtigkeitseintrag in die Silokammern, z.B. durch einfallenden Regen, möglich ist, wodurch es zu Verschiebungen der Rezeptur kommen kann.

### DARSTELLUNG DER ERFINDUNG

Es stellt sich deshalb die Aufgabe, technische Lösungen zur Verfügung zu stellen, welche die zuvor genannten Nachteile des Standes der Technik nicht aufweisen oder zumindest teilweise vermeiden.

Diese Aufgabe wird durch die Gegenstände der unabhängigen Patentansprüchen gelöst.

Entsprechend betrifft ein erster Aspekt der Erfindung eine Anordnung mit mehreren Silokammern, bevorzugterweise für schüttfähige Zuschlagstoffe für die Betonherstellung. Die Silokammern weisen jeweils an ihrem oberen Ende eine Einfüllöffnung zum Einfüllen von schüttfähigem Material durch Schwerkraftförderung, bevorzugterweise durch freien Einfall, in die Silokammer auf. Diese Einfüllöffnung kann z.B. dadurch gebildet sein, dass die Silokammer ohne Querschnittverjüngung nach oben offen ist, oder z.B. auch dadurch, dass die Silokammer sich nach oben hin verjüngt und am Ende dieser Verjüngung nach oben hin offen ist.

Die Einfüllöffnungen der Silokammern sind jeweils zumindest in einem Teilbereich durch ein gemeinsames Abdeckelement abgedeckt, welches mindestens eine Durchtrittsöffnung aufweist und derartig bewegbar ist, dass diese mindestens eine Durchtrittsöffnung wahlweise in Überdeckung mit den Einfüllöffnungen verschiedener Silokammern, insbesondere aller Silokammern der Anordnung, gebracht werden kann, zur Ermöglichung eines Zuführens von schüttfähigem Material durch die Durchtrittsöffnung und die jeweilige Einfüllöffnung in die jeweilige Silokammer.

Auf dem Abdeckelement sind mit dem Abdeckelement mitbewegbare Fördermittel angeordnet, mit denen im bestimmungsgemässen Betrieb der Anordnung ein schüttfähiges Material, welches an einem anlagefesten Zuführungsort bevorzugterweise durch Schwerkraftförderung den Fördermitteln zugeführt wird, zu der sich in Überdeckung mit einer der Einfüllöffnungen befindlichen Durchtrittsöffnung geführt werden kann, zum Zuführen des schüttfähigen Materials in die Einfüllöffnung der jeweiligen Silokammer.

Durch die erfindungsgemässe Anordnung wird es möglich, kostengünstig mehrere Silokammern für schüttfähiges Material bereitzustellen und derartig zu bewirtschaften, dass diese eine hohe Personensicherheit und eine reduzierte Neigung zur Brückenbildung aufweisen. Zudem kann durch diese Anordnung die Staubentwicklung und die Gefahr eines Feuchtigkeitseintrags in die Silokammern deutlich verringert werden.

In einer bevorzugten Ausführungsform der Anordnung ist das Abdeckelement rotierbar um eine im Wesentlichen vertikale Drehachse herum, um die Durchtrittsöffnung wahlweise in Überdeckung mit den Einfüllöffnungen zu bringen. Dabei befindet sich der anlagenfeste Zuführungsort, an welchem die Fördermittel mit dem schüttfähigen Material beschickt werden, im Bereich der Drehachse des Abdeckelements. Auf diese Weise können mit einer einfachen Bewegung des Abdeckelements auf kleinstem Raum eine Vielzahl von Einfüllöffnungen bedient werden.

Dabei ist es bevorzugt, dass die Einfüllöffnungen der Silokammern, und bevorzugterweise auch die Silokammern selbst, um die Drehachse des Abdeckelements herum angeordnet sind, bevorzugterweise über einen Umfang von 360°, und zwar mit Vorteil mit gleichmässiger Winkelteilung. Hierdurch kann die Anordnung besonders kompakt ausgebildet werden.

Das Abdeckelement wird bei dieser zuvor erwähnten Ausführungsform bevorzugterweise als im Wesentlichen kreisrunde oder kreisringförmige Abdeckplatte mit darauf angeordneten Fördermitteln ausgebildet, deren Zentrum mit der Drehachse zusammenfällt. Auf diese Weise kann diese Ausführungsform mit sehr geringem anlagentechnischen Aufwand realisiert werden.

In einer weiteren bevorzugten Ausführungsform der Anordnung sind die Fördermittel ausgebildet um im bestimmungsgemässen Betrieb der Anordnung einen kontinuierlich zugeführten Strom aus einem schüttfähigen Material kontinuierlich zur Durchtrittsöffnung zu führen. Hierdurch lässt sich die Gefahr einer Brückenbildung im Eintrittsbereich der Silokammern weiter herabsetzen.

In noch einer weiteren bevorzugten Ausführungsform der Anordnung sind die Fördermittel als statische oder vibrationserregte Rutsche oder Förderrinne oder als statischer oder vibrationserregter Führungstrichter ausgebildet, oder umfassen eine solche Rutsche oder Förderrinne oder einen solchen Führungstrichter. Derartige Fördermittel sind robust und kostengünstig sowohl in der Anschaffung als auch im Unterhalt.

In noch einer weiteren bevorzugten Ausführungsform sind die Fördermittel als Förderband oder Förderschnecke ausgebildet, oder umfassen ein Förderband oder eine Förderschnecke. Derartige Fördermittel weisen den Vorteil auf, dass sie auch Steigungen überwinden können und dass ihre Förderrichtung auf einfache Weise reversierbar ist.

Dabei ist es in einer ersten Variante bei Ausführungsformen, bei denen das Abdeckelement im Wesentlichen als kreisrunde oder kreisringförmige Abdeckplatte mit darauf angeordnetem Förderband oder darauf angeordneter Förderschnecke ausgebildet ist, deren Zentrum die Drehachse des Abdeckelements ist, bevorzugt, dass das Abdeckelement genau eine Durchtrittsöffnung aufweist und sich das Förderband oder die Förderschnecke von der Drehachse des Abdeckelements bis zur Durchtrittsöffnung erstreckt. Hierdurch ergibt sich der Vorteil, dass sich das Förderband oder die Förderschnecke lediglich etwa über den halben Durchmesser des Abdeckelements erstrecken muss, und somit relativ kurz und daher kostengünstig sein kann.

In einer zweiten Variante ist es dabei bei Ausführungsformen, bei denen das Abdeckelement im Wesentlichen als kreisrunde oder kreisringförmige Abdeckplatte mit darauf angeordnetem Förderband oder angeordneter Förderschnecke ausgebildet ist, deren Zentrum die Drehachse des Abdeckelements ist, bevorzugt, dass das Abdeckelement genau zwei sich bezüglich der Drehachse des Abdeckelements gegenüberliegende Durchtrittsöffnungen aufweist. Dabei erstreckt sich das Förderband oder die Förderschnecke von der erster Durchtrittsöffnung über die Drehachse des Abdeckelements bis zur zweiten Durchtrittsöffnung und ist reversierbar ausgebildet. Durch diese Bauweise ergibt sich der Vorteil, dass das Abdeckelement für eine Bedienung aller erdenklichen Umfangspositionen mit einem seiner beiden Durchtrittsöffnungen lediglich einen maximalen Verdrehwinkel von weniger als 180° bzw. von weniger als +/- 90° um eine Grundposition herum aufweisen muss, was eine einfache und kostengünstige Konstruktion der Drehlagerung und des Drehantriebs begünstigt.

In noch einer weiteren bevorzugten Ausführungsform der Anordnung sind der Bereich der Eintrittsseite der mindestens einen Durchtrittsöffnung und insbesondere auch die Fördermittel mit einer Abdeckung versehen, zur Verhinderung eines freien Eingriffs in die mindestens eine Durchtrittsöffnung und insbesondere auch in die Fördermittel.

Weiter ist es bevorzugt, dass die Anordnung Verschlussmittel aufweist, z.B. Schieber, mit denen bei Nichtzuführung von Material zu den Fördermitteln die mindestens eine Durchtrittsöffnung verschlossen werden kann, und zwar bevorzugterweise automatisch.

Durch die beiden letztgenannten Massnahmen kann die Personensicherheit weiter verbessert werden und die Staubentwicklung und die Gefahr von Wassereintrag in die Silokammern weiter reduziert werden.

Die Silokammern der erfindungsgemässen Anordnung werden bevorzugterweise von einzelnen feststehenden Silos gebildet oder von einem oder mehreren feststehenden Silos, deren Innenraum durch vertikale Trennwände in mehrere Silokammern unterteilt ist. Im letztgenannten Fall ist es weiter bevorzugt, dass die Innenräume der Silos in mehrere identische Silokammern mit kreisabschnittsförmigem oder kreisringsabschnittsförmigem Querschnitt unterteilt sind. Diese Bauweise ermöglicht besonders kompakte erfindungsgemässe Anordnungen.

Um trotz guter Personensicherheit einen Zugang zu den Silokammern zu ermöglichen, ist es bevorzugt, dass das Abdeckelement ein Mannloch aufweist, durch welches nach vorherigem Öffnen oder Entfernen eines Verschlussdeckels eine Person in eine darunter liegende Silokammer einsteigen kann.

Zur weiteren Steigerung der Personensicherheit ist es zudem bevorzugt, dass Sicherungsmittel vorhanden sind, welche bei einem Betreten des Abdeckelements durch eine Person und/oder bei geöffnetem Mannloch, sofern vorhanden, verhindern, dass das Abdeckelement bewegt werden kann.

Ein zweiter Aspekt der Erfindung betrifft die Verwendung der Anordnung gemäss dem ersten Aspekt der Erfindung für schüttfähige Zuschlagstoffe für die Betonherstellung. Bei solchen Verwendungen treten die Vorteile der Erfindung besonders deutlich zu Tage.

### KURZE BESCHREIBUNG DER ZEICHNUNG

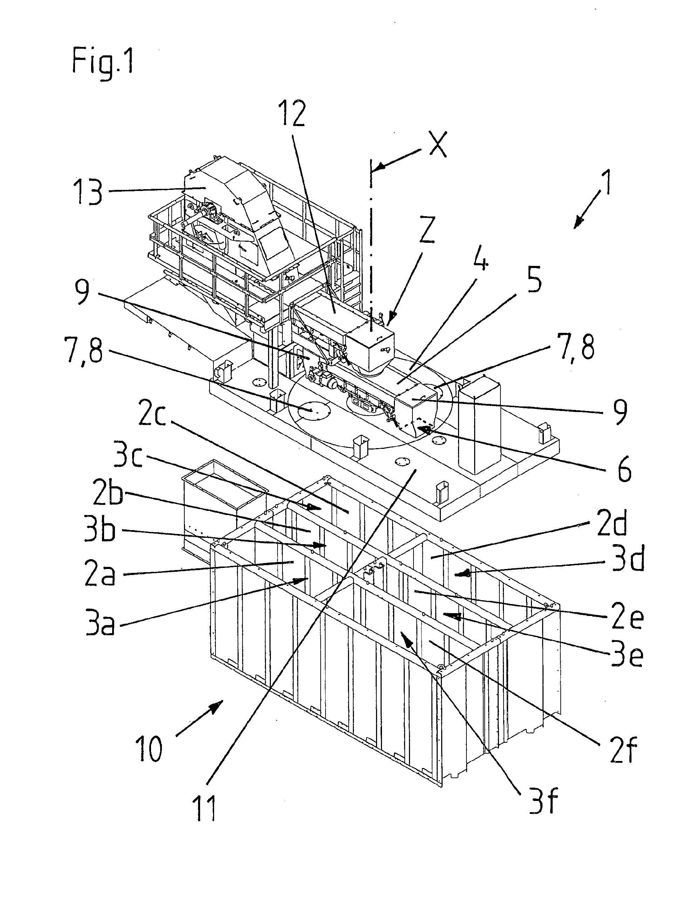

Weitere Ausgestaltungen, Vorteile und Anwendungen der Erfindung ergeben sich aus den abhängigen Ansprüchen und aus der nun folgenden Beschreibung anhand der Fig. 1. Diese zeigt eine perspektivische Draufsicht auf eine erfindungsgemässe Anordnung.

### WEGE ZUR AUSFÜHRUNG DER ERFINDUNG

Fig. 1 zeigt in perspektivischer Draufsicht eine erfindungsgemässe Anordnung 1 für schüttfähige Zuschlagstoffe für die Betonherstellung, wie Sand, Kies, etc., wobei zur besseren Erkennbarkeit des Aufbaus der Anordnung der obere Teil der Anordnung 1 abgehoben von dem unteren Teil der Anordnung 1 dargestellt ist.

Wie zu erkennen ist, umfasst der untere Teil der Anordnung 1 ein rechteckiges Silo 10, dessen Innenraum durch ebene vertikale Trennwände in sechs identische rechteckige Silokammern 2a-2f unterteilt ist. Diese Silokammern 2a-2f bilden an ihren oberen Enden jeweils eine anspruchsgemässe Einfüllöffnung 3a-3f zum Einfüllen der schüttfähigem Zuschlagsstoffe in die jeweilige Silokammer 2a-2f durch freien, schwerkraftbedingten Einfall.

Der obere Teil der Anordnung 1 umfasst eine rechteckige Abdeckplatte 11, 4, welche die Einfüllöffnungen 3a-3f der Silokammern 2a-2f vollständig abdeckt und dadurch ein Eindringen von Feuchtigkeit, z.B. durch Regen oder Taufall, in die Silokammern 2a-2f und ein Austreten von Staub aus den Silokammern 2a-2f verhindert. Zudem verhindert die Abdeckplatte 11, 4 auch, dass Gegenstände und Personen von oben in die Silokammern 2a-2f fallen können. Ein zentraler Bereich der Abdeckplatte 11, 4 wird von einem kreisrunden Abdeckelement 4 gebildet, welches jeweils einen Teilbereich jeder der Einfüllöffnungen 3a-3f der Silokammern 2a-2f abdeckt. Das Abdeckelement 4 ist mittels eines elektrischen Antriebs (nicht gezeigt) rotierbar um eine in seinem Kreisszentrum verlaufende vertikale Drehachse X herum und weist zwei sich bezüglich der Drehachse X des Abdeckelements 4 gegenüberliegende rechteckige Durchtrittsöffnungen 6 auf, zwischen denen sich ein von dem Abdeckelement 4 getragenes und mit diesem um die Drehachse X rotierbares reversierbares Förderband 5 erstreckt. Eine erste der beiden Durchtrittsöffnungen 6, welche in der Darstellung unter einer gut sichtbaren Abdeckung 9 verborgen ist, ist durch gestrichelte Linien dargestellt. Die zweite Durchtrittsöffnung, welche ebenfalls unter einer identischen Abdeckung 9 am anderen Ende des Förderbands 5 verborgen ist und aufgrund der perspektivischen Darstellung noch hintere weiteren Komponenten der Anordnung 1 verborgen ist, ist in der Figur nicht sichtbar.

Durch Rotieren des Abdeckelements 4 um die Drehachse X herum können die Durchtrittsöffnung 6 wahlweise in Überdeckung mit den Einfüllöffnungen 3a-3f der Silokammern 2a-2f gebracht werden, wobei hier eine Rotation um +/- 45° ausreichend ist, um jede der Einfüllöffnungen 3a-3f mit einer der beiden Durchtrittsöffnungen 6 in Überdeckung zu bringen.

Oberhalb des Förderbands 5 ist ein Zuführförderband 12 angeordnet, welches von einem Elevator 13 mit den einzulagernden schüttfähigen Zuschlagsstoffen beschickt wird. Dieses Zuführförderband 12 fördert die Zuschlagstoffe in den Bereich der Drehachse X des Abdeckelements 4 (anspruchsgemässer anlagefester Zuführungsort Z) und übergibt diese dort an das Förderband 5, welches die Zuschlagstoffe dann wiederum, je nach Förderrichtung, zur ersten oder zweiten Durchtrittsöffnung 6 fördert, von wo sie dann über die gerade mit der jeweiligen Durchtrittsöffnung 6 in Überdeckung stehende Einfüllöffnung 3a-3f in die zugeordnete Silokammer 2a-2f fallen.

Wie weiter zu erkennen ist, verfügt das Abdeckelement 4 über zwei Mannlöcher 7, welche jeweils mit einem Verschlussdeckel 8 verschlossen sind und nach einem Entfernen des Verschlussdeckels 8 einer Person den Einstieg in die darunter liegende Silokammer 2a; 2d ermöglicht.

Auch verfügt die Anordnung 1 über Sicherungsmittel, welche bei einem Betreten des Abdeckelements 4 durch eine Person oder bei geöffnetem Mannloch 7 verhindern, dass das Abdeckelement 4 um die Drehachse X rotiert werden kann.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Anordnung (1) umfassend mehrere Silokammern (2a-2f), insbesondere für schüttfähige Zuschlagstoffe für die Betonherstellung, welche an ihrem oberen Ende jeweils eine Einfüllöffnung (3a-3f) zum Einfüllen von schüttfähigem Material durch Schwerkraftförderung, insbesondere durch freien Einfall, in die Silokammer (2a-2f) aufweisen,
wobei die Einfüllöffnungen (3a-3f) der Silokammern (2a-2f) jeweils zumindest in einem Teilbereich durch ein gemeinsames Abdeckelement (4) abgedeckt sind, welches mindestens eine Durchtrittsöffnung (6) aufweist und derartig bewegbar ist, dass die Durchtrittsöffnung (6) wahlweise in Überdeckung mit den Einfüllöffnungen (3a-3f) verschiedener Silokammern (2a-2f) gebracht werden kann, zur Ermöglichung eines Zuführens von schüttfähigem Material durch die Durchtrittsöffnung (6) und die jeweilige Einfüllöffnung (3a-3f) in die jeweilige Silokammer (2a-2f),
und wobei auf dem Abdeckelement (4) mit diesem mitbewegbare Fördermittel (5) angeordnet sind, mit denen im bestimmungsgemässen Betrieb der Anordnung (1) ein an einem anlagefesten Zuführungsort (Z) insbesondere durch Schwerkraftförderung diesen Fördermitteln (5) zugeführtes schüttfähiges Material zu der sich in Überdeckung mit einer der Einfüllöffnungen (3a-3f) befindlichen Durchtrittsöffnung (6) geführt werden kann, zwecks Ermöglichung einer Zuführung des schüttfähigen Materials in die der Einfüllöffnung (3a-3f) zugeordnete Silokammer (2a-2f).

2. Anordnung (1) nach Anspruch 1, wobei das Abdeckelement (4) rotierbar um eine im Wesentlichen vertikale Drehachse (X) herum ist, um die Durchtrittsöffnung (6) wahlweise in Überdeckung mit den Einfüllöffnungen (3a-3f) zu bringen,
und wobei sich der anlagenfeste Zuführungsort (Z), von welchem die Fördermittel (5) das zugeführte schüttfähige Material zu der Durchtrittsöffnung (6) führen können, im Bereich der Drehachse (X) des Abdeckelements (4) befindet.

3. Anordnung (1) nach Anspruch 2, wobei die Einfüllöffnungen (3a-3f) der Silokammern (2a-2f), und insbesondere die Silokammern (2a-2f), um die Drehachse (X) des Abdeckelements (4) herum angeordnet sind, insbesondere über einen Umfang von 360°, und insbesondere mit gleichmässiger Winkelteilung.

4. Anordnung (1) nach Anspruch 3, wobei das Abdeckelement (4) im Wesentlichen als kreisrunde oder kreisringförmige Abdeckplatte (4) mit darauf angeordneten Fördermitteln (5) ausgebildet ist, deren Zentrum mit der Drehachse (X) zusammenfällt.

5. Anordnung (1) nach einem der vorangehenden Ansprüche, wobei die Fördermittel (5) ausgebildet sind um im bestimmungsgemässen Betrieb der Anordnung (1) einen kontinuierlich zugeführten Strom aus einem schüttfähigen Material kontinuierlich zur Durchtrittsöffnung (6) zu führen.

6. Anordnung nach einem der vorangehenden Ansprüche, wobei die Fördermittel als statische oder vibrationserregte Rutsche oder Förderrinne oder als statischer oder vibrationserregter Führungstrichter ausgebildet sind, oder eine solche Rutsche oder Förderrinne oder einen solchen Führungstrichter umfassen.

7. Anordnung (1) nach einem der vorangehenden Ansprüche, wobei die Fördermittel (5) als Förderband (5) oder Förderschnecke ausgebildet sind, oder ein Förderband (5) oder eine Förderschnecke umfassen.

8. Anordnung nach Anspruch 4 und nach Anspruch 7, wobei das Abdeckelement genau eine Durchtrittsöffnung aufweist und sich das Förderband oder die Förderschnecke von der Drehachse des Abdeckelements bis zur Durchtrittsöffnung erstreckt.

9. Anordnung (1) nach Anspruch 4 und nach Anspruch 7, wobei das Abdeckelement (4) genau zwei sich bezüglich der Drehachse (X) des Abdeckelements (4) gegenüberliegende Durchtrittsöffnungen (6) aufweist und wobei sich das Förderband (5) oder die Förderschnecke, welches oder welche reversierbar ist, von der ersten Durchtrittsöffnung (6) über die Drehachse (X) bis zur zweiten Durchtrittsöffnung erstreckt.

10. Anordnung (1) nach einem der vorangehenden Ansprüche, wobei der Bereich der Eintrittsseite der mindestens einen Durchtrittsöffnung (6) und insbesondere auch die Fördermittel mit einer Abdeckung (9) versehen sind, zur Verhinderung eines freien Eingriffs in die Durchtrittsöffnung (6) und insbesondere in die Fördermittel.

11. Anordnung nach einem der vorangehenden Ansprüche, wobei die Anordnung insbesondere automatisch betätigbare Verschlussmittel aufweist, insbesondere Schieber, zum insbesondere automatischen Verschliessen der mindestens einen Durchtrittsöffnung bei Nichtzuführung von Material.

12. Anordnung (1) nach einem der vorangehenden Ansprüche, wobei die Silokammern (2a-2f) von einzelnen feststehenden Silos gebildet sind oder von einem (10) oder mehreren feststehenden Silos, dessen oder deren Innenraum durch vertikale Trennwände in mehrere Silokammern (2a-2f) unterteilt ist, insbesondere in mehrere identische Silokammern mit insbesondere kreisabschnittsförmigem oder kreisringsabschnittsförmigem Querschnitt.

13. Anordnung (1) nach einem der vorangehenden Ansprüche, wobei das Abdeckelement (4) ein Mannloch (7) aufweist, durch welches nach vorherigem Öffnen oder Entfernen eines Verschlussdeckels (8) eine Person in eine darunter liegende Silokammer (2a; 2d) einsteigen kann.

14. Anordnung (1) nach einem der vorangehenden Ansprüche, wobei Sicherungsmittel vorhanden sind, welche bei einem Betreten des Abdeckelements (4) durch eine Person und/oder bei geöffnetem Mannloch (7), sofern vorhanden, verhindern, dass das Abdeckelement (4) bewegt werden kann.

15. Verwendung der Anordnung (1) nach einem der vorangehenden Ansprüche für schüttfähige Zuschlagstoffe für die Betonherstellung.
